# EUROPÄISCHE PATENTSCHRIFT

(11) **EP 2 279 979 B1**
(45) Veröffentlichungstag und Bekanntmachung des Hinweises auf die Patenterteilung: **06.03.2013**
(21) Anmeldenummer: 10007935.9
(22) Anmeldetag: 29.07.2010
(51) Int. Cl.: F03D 1/00, B66C 23/52, B66C 1/16

(54) **Vorrichtung zur Vormontage, Zwischenlagerung und zum Transport grosser Bauteile, insbesondere Bauteile von Windenergieanlagen**
Device for pre-fitting, interim storage and transport of large components, particularly components of wind energy assemblies
Dispositif de pré-montage, palier intermédiaire et de transport de grands composants, notamment de composants d'éoliennes

(30) Priorität: 31.07.2009 DE 202009010393 U
(43) Veröffentlichungstag der Anmeldung: 02.02.2011
(73) Patentinhaber: BARD Holding GmbH, 26725 Emden (DE)
(72) Erfinder: Schultes, Klaus, 26607 Aurich (DE)
(74) Vertreter: Manasse, Uwe

(56) Entgegenhaltungen:
- WO-A1-00/77306
- WO-A1-2009/041812
- WO-A2-2010/006602
- DE-A1-102005 011 757

## Beschreibung

Die Erfindung liegt auf dem Gebiet der Montage, des Transports, der Lagerung sowie Verladung großer Bauteile, insbesondere zum Transport über große Entfernungen sowie zum Transport und zum Umschlag auf See.

Genauer gesagt betrifft die vorliegende Erfindung eine Vorrichtung zur Vormontage, Zwischenlagerung und zum Transport großer Bauteile, insbesondere Bauteile von Windenergieanlagen wie beispielsweise Gondeln oder Maschinenhäuser.

Herkömmlicherweise werden große Bauteile, insbesondere Bauteile von Windenergieanlagen, z.B. Gondeln und Maschinenhäuser, zunächst montiert, sodann auf ein Transportgestell verbracht und an diesem befestigt. Das Transportgestell wird danach mitsamt dem Bauteil auf ein Transportfahrzeug, bspw. ein Schiff oder einen Ponton, verbracht. Wegen der Größe solcher Bauteile und großer Anforderungen hinsichtlich des Transports, die sich beispielsweise durch starken Seegang ergeben, muss das Transportgestell besonders robust sein und auch eine bestimmte Mindestgröße aufweisen. Hierbei kommt es gemäß dem Stand der Technik zu vielfältigen Problemen. Eine Vorrichtung gemäß dem Oberbegriff des Anspruchs 1, ist aus WO 00/77306 (A1) und WO 972 99 88 (A1) bekannt.

So besteht am Montageort üblicherweise Platzmangel. Eine Montage des Bauteils direkt auf dem Transportgestell ist problematisch, da das Transportgestell am Montageort zuviel Platz beanspruchen würde. Ein Transportgestell beansprucht nämlich eine besonders große Grundfläche, um einen (seitlichen) Kontakt von Zugeinrichtungen, wie z.B. ein oder mehrere Haken oder Hubgeschirr, der/die/das an dem Transportgestell befestigt werden soll(en), mit dem Bauteil zu vermeiden. Allerdings ist auch eine Montage ohne Transportgestell sowie ein anschließendes Verladen des Bauteils direkt auf das Transportgestell problematisch. Verbindungen zwischen dem Bauteil und dem Transportgestell müssen robust sein und sind wegen variierender Bauteile üblicherweise aufwendig herzustellen. Außerdem soll ein direktes Befestigen einer Zugeinrichtung, beispielsweise eines Seils, zum Heben und Verladen des Bauteils am Bauteil selbst möglichst vermieden werden. Häufig wird es daher bevorzugt, das Bauteil trotz des Platzmangels direkt auf einem Transportgestell zu montieren.

Der vorliegenden Erfindung liegt somit die Aufgabe zugrunde, eine Vorrichtung der eingangs genannten Art zu schaffen, die bei der Montage eines Bauteils nur wenig Platz beansprucht und dennoch beim Transport des Bauteils weit vom Bauteil entfernte Anschlagpunkte aufweist.

Erfindungsgemäß wird diese Aufgabe gelöst durch eine Vorrichtung zur Vormontage, Zwischenlagerung und zum Transport großer Bauteile, insbesondere Bauteile von Windenergieanlagen wie beispielsweise Gondeln oder Maschinenhäuser, umfassend: ein Montagegestell zur Vormontage und eventuellen Zwischenlagerung eines Bauteils mit Anschlagpunkten, wobei das Montagegestell mindestens eine Befestigungseinrichtung zum lösbaren Befestigen des Bauteils auf dem Montagegestell und zum Anheben und Verladen des Montagegestells mitsamt dem darauf lösbar befestigten Bauteil über die am Bauteil befindlichen Anschlagpunkte aufweist, und ein Transportgestell zur Aufnahme und zum Transport des Montagegestells mitsamt dem darauf lösbar befestigten Bauteil, wobei das Transportgestell mindestens eine Befestigungseinrichtung zum lösbaren Befestigen des Montagegestells mitsamt dem darauf lösbar befestigten Bauteil auf dem Transportgestell und eine größere Grundfläche als das Montagegestell aufweist sowie über am Transportgestell befindliche Anschlagpunkte mitsamt dem darauf lösbar befestigten Montagegestell und dem darauf lösbar befestigten Bauteil heb- und verladbar ist.

Gemäß einer besonderen Ausführungsform ist das Montagegestell an dem Transportgestell mittels Kraftschluss befestigt.

Alternativ ist das Montagegestell an dem Transportgestell mittels Formschluss befestigt.

Der Erfindung liegt die überraschende Erkenntnis zugrunde, dass durch die Verwendung von zwei Gestellen die Montage eines Bauteils wenig Platz benötigt und dennoch die Anschlagpunkte beim nachfolgenden Transport relativ fern vom Bauteil liegen.

Ein weiterer besonderer Vorteil der Erfindung liegt darin, dass gegebenenfalls gegenüber der Anzahl von Montagegestellen deutlich weniger große robuste Transportgestelle benötigt werden, da die Transportgestelle lediglich beim Transport und beim Umschlag auf hoher See, nicht jedoch am Montageort des Bauteils benötigt werden. So können etwa Bauteile auf Montagegestellen am Montageort- bzw. Herstellungsort montiert werden, während bereits montierte Bauteile mit weiteren Montagegestellen in Verbindung mit den größeren Transportgestellen auf See transportiert werden.

Weitere Merkmale und Vorteile der Erfindung ergeben sich aus den Ansprüchen und aus der nachfolgenden Beschreibung, in der ein Ausführungsbeispiel anhand der schematischen Zeichnungen im einzelnen erläutert ist, in denen:
Fig. 1 eine Seitenansicht teilweise im Schnitt einer Vorrichtung gemäß einer besonderen Ausführungsform der Erfindung in einem ersten Einsatzstadium zeigt;
Fig. 2 die Vorrichtung von Fig. 1 in einem zweiten Einsatzstadium zeigt;
Fig. 3 die Vorrichtung von Fig. 1 in einem dritten Einsatzstadium zeigt; und
Fig. 4 die Vorrichtung von Fig. 1 in einem vierten Einsatzstadium zeigt.

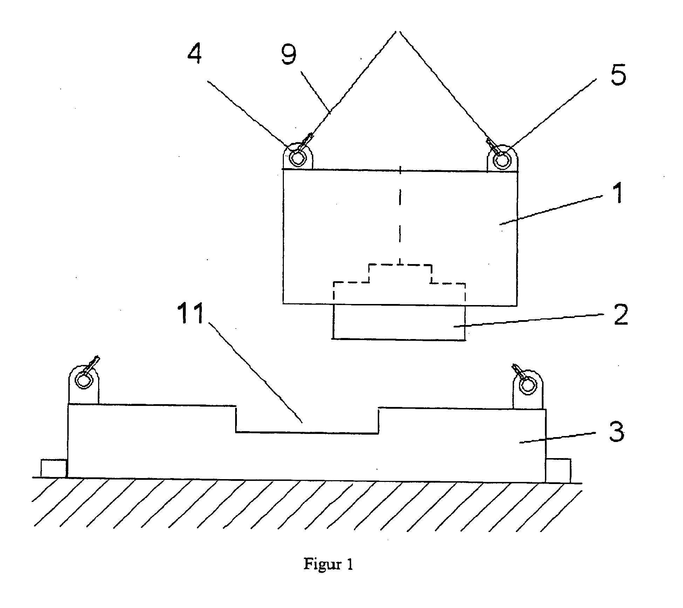

In Fig. 1 ist ein Bauteil 1 bereits auf einem Montagegestell 2 montiert und wird mittels Zugeinrichtungen 9, die hier als Seile angedeutet sind und an beispielsweise vier Anschlagpunkten, von denen nur zwei, nämlich 4 und 5, zu sehen sind, wie z.B. Ösen oder Haken, an der Oberseite des Bauteils 1 befestigt sind, auf ein Transportgestell 3 mit Anschlagpunkten 6 und 7, wie z.B. Ösen oder Haken, an der Oberseite des Transportgestells verladen. Das Bauteil 1 ist am Montage- bzw. Herstellungsort direkt auf dem Montagegestell 2 montiert worden. Das Montagegestell 2 weist vorzugsweise geringere Abmessungen als das Bauteil 1 auf, so dass am Herstellungsort nur wenig Raum, insbesondere eine Grundfläche, die über die Grundfläche des Bauteils nicht hinausgeht, durch das Montagegestell 2 beansprucht wird. Das gezeigte Transportgestell 3, das eine größere Grundfläche als das Montagegestell 2 aufweist, braucht sich nicht am Montageort zu befinden, sondern kommt erst nach der Montage des Bauteils 1 zum Einsatz, indem das Montagegestell 2 mitsamt dem Bauteil 1 auf das Transportgestell 3 verladen wird.

Die Anschlagpunkte 4 und 5 benötigen vorteilhafterweise nur so viel Festigkeit, um Bauteil 1 und Montagegestell 2 zu tragen. Dies ist insofern vorteilhaft, als dass solche Anschlagpunkte 4 und 5 relativ einfach herzustellen sind.

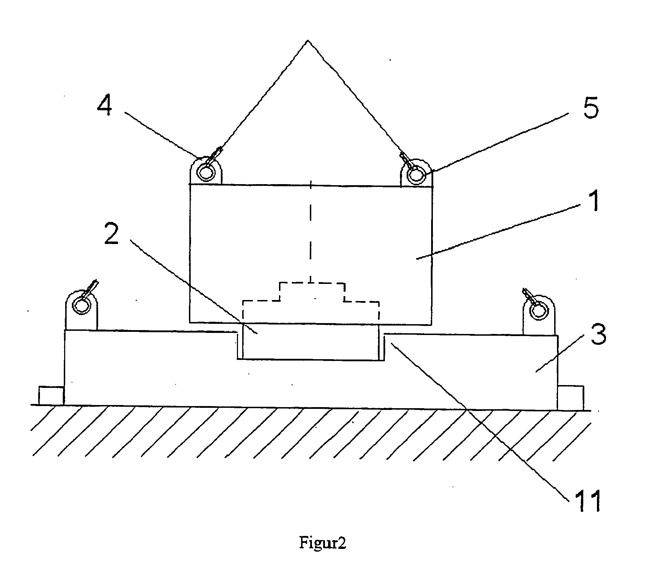

Fig. 2 zeigt das Befestigen des Montagegestells 2 mitsamt zu verladenem Bauteil 1 auf dem Transportgestell 3. Dazu ist an der Oberseite des Transportgestells 3 eine Vertiefung 11 vorgesehen, die die Unterseite des Montagegestells 2 form- oder kraftschlüssig aufnimmt. Mehrere Montagegestelle 2 können zeitlich nacheinander mit demselben Transportgestell 3 transportiert werden, so dass ein einziges derartiges Transportgestell 3 zum Transport mehrerer Bauteile nacheinander dienen kann. Vorteilhafterweise werden gemäß einer besonderen Ausführungsform verschiedenartige Bauteile zeitlich nacheinander mit dem gleichen Montagegestell 2 oder mit verschiedenen Montagegestellen verbunden und anschließend jeweils, wie in Fig. 2 gezeigt, auf dem Transportgestell 3 befestigt. Gemäß einer besonderen Ausführungsform erfolgt das Befestigen oder Fixieren des Montagegestells 2 mitsamt dem Bauteil 1 mittels einer Zentrierung des Montagegestells 2 mitsamt dem Bauteil 1 über dem Transportgestell 3. Die Zentrierung kann alternativ anhand des Bauteils 1 selbst erfolgen.

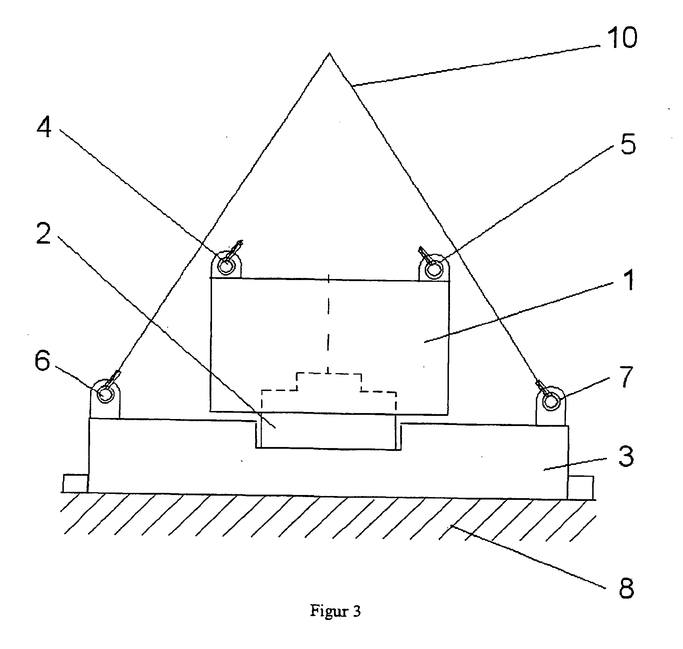

Fig.3 zeigt das Verladen des Bauteils 1 auf ein Schiff oder einen Ponton 8. Das Verladen erfolgt über das Transportgestell 3, an dem Zugeinrichtungen 10, hier als Seile angedeutet, befestigt sind. Die Zugeinrichtungen 10 sind an z.B. vier Anschlagpunkten, von denen nur zwei, nämlich 6 und 7 zu sehen sind, befestigt. Die Anschlagpunkte sind so an der Oberseite des Transportgestells 3 angeordnet, dass sie möglichst weit nach außen von dem Bauteil 1 entfernt liegen. Dadurch wird verhindert, dass die Zugeinrichtungen 10 mit dem Bauteil 1 in Kontakt geraten und dieses beschädigen. Zusätzlich oder alternativ zum Verladen des Bauteils 1 auf ein Schiff oder dem Ponton 8 kann auch eine Verladung des Bauteils 1 mitsamt dem Montagegestell 2 und dem Transportgestell 3 von einem Schiff bzw. Ponton 8 an einen Bestimmungsort außerhalb eines Schiffes bzw. Pontons 8 oder an einen anderen Bestimmungsort erfolgen. Dieser Bestimmungsort kann bspw. eine Errichtereinheit umfassen, an der das Bauteil 1 eingebaut werden soll.

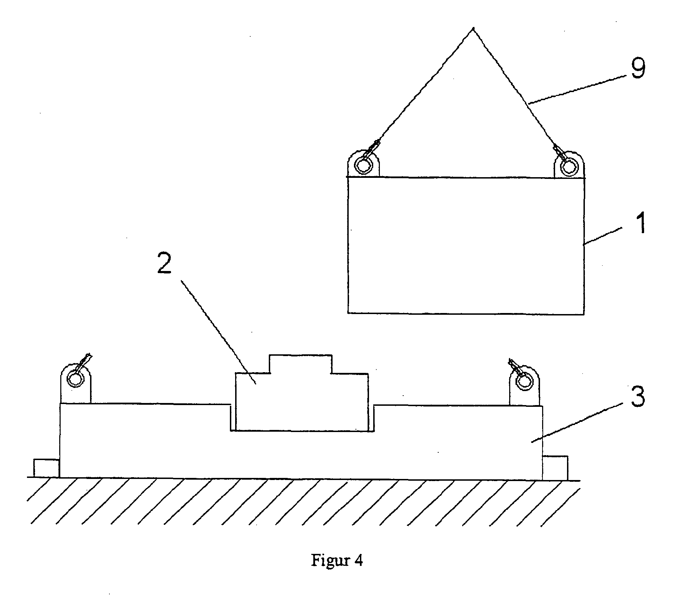

Fig. 4 zeigt, wie das Bauteil 1 nach dem Transport mit dem Transportgestell 3 ohne Montagegestell 2 abgeladen wird. Dazu wird das Bauteil 1 vom Montagegestell 2 gelöst und separat bspw. mit einem Kran (nicht gezeigt) über die Zugeinrichtungen 9 angehoben.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Vorrichtung (2, 3) zur Vormontage, Zwischenlagerung und zum Transport großer Bauteile (1), insbesondere Bauteile von Windenergieanlagen, wie beispielsweise Gondeln oder Maschinenhäuser, umfassend:
ein Montagegestell (2) zur Vormontage und eventuellen Zwischenlagerung eines Bauteils (1) auf demselben, wobei das Bauteil (1) Anschlagpunkte (4,5) aufweist, wobei das Montagegestell (2) mindestens eine Befestigungseinrichtung zum lösbaren Befestigen des Bauteils (1) auf dem Montagegestell (2) und zum senkrechten Anheben und Verladen des Bauteils (1) mitsamt dem darunter lösbar befestigten Montagegestells (2) über die am Bauteil (1) befindlichen Anschlagpunkte (4, 5) aufweist, wobei das Montagegestell (2) lediglich mittelbar über das Bauteil (1) angehoben wird, und
ein Transportgestell (3) zur Aufnahme und zum Transport des Montagegestells (2) mitsamt dem darauf lösbar befestigten Bauteil (1), wobei das Transportgestell (3) mindestens eine Befestigungseinrichtung zum lösbaren Befestigen des Montagegestells (2) mitsamt dem darauf lösbar befestigten Bauteil (1) auf dem Transportgestell (3) und eine größere Grundfläche als das Montagegestell (2) aufweist sowie über am Transportgestell (3) befindliche Anschlagpunkte (6, 7) mitsamt dem darauf lösbar befestigten Montagegestell (2) und dem darauf lösbar befestigten Bauteil (1) heb- und verladbar ist.

2. Vorrichtung (2, 3) nach Anspruch 1, **dadurch gekennzeichnet, dass** das Montagegestell (2) an dem Transportgestell (3) mittels Kraftschluss befestigt ist.

3. Vorrichtung (2, 3) nach Anspruch 1, **dadurch gekennzeichnet, dass** das Montagegestell (2) an dem Transportgestell (3) mittels Formschluss befestigt ist.

## Claims

1. Device (2, 3) for pre-fitting, interim storage and transport of large components, particularly components (1) of wind energy assemblies such as gondolas or nacelles, comprising:
an assembly frame (2) for pre-fitting and possible interim storage of a component (1) on the same, wherein the component (1) has attachment units (4, 5), wherein the assembly frame (2) has at least one fastening device for detachably fastening the component (1) on the assembly frame (2) and for vertically lifting and loading the component (1) together with the assembly frame (2) detachably fastened underneath by the attachment units (4, 5) located at the component (1), wherein the assembly frame (2) is only indirectly lifted over the component (1), and
a transport frame (3) for receiving and transporting the assembly frame (2) together with the component (1) detachably fastened thereon, wherein the transport frame (3) has at least one fastening device for detachably fastening the assembly frame (2) together with the component (1) detachably fastened thereon on the transport frame (3) and a larger base surface than the assembly frame (2) and can be lifted and loaded by attachment units (6, 7) located at the transport frame (3) together with the assembly frame (2) detachably fastened thereon and the component (1) detachably fastened thereon.

2. Device (2, 3) according to claim 1, **characterised in that** the assembly frame (2) is fastened to the transport frame (3) by means of force fit.

3. Device (2, 3) according to claim 1, **characterised in that** the assembly frame (2) is fastened to the transport frame (3) by means of form fit.

## Revendications

1. Dispositif (2, 3) pour le pré-montage, le stockage provisoire et le transport de composants (1), en particulier des composants d'installations éoliennes, tels que des nacelles ou des carters de moteur, comprenant :
un châssis de montage (2) pour le pré-montage et le stockage provisoire éventuel d'un composant (1) sur celui-ci, le composant (1) présentant des points d'accrochage (4, 5), le châssis de montage (2) comportant au moins un dispositif de fixation pour la fixation amovible du composant (1) sur le châssis de montage (2) et le levage et le chargement au moyen des points d'accrochage (4, 5) disposés sur le composant (1) du châssis de montage (2) avec le composant (1) fixé de manière amovible sur celui-ci, le châssis de montage (2) n'étant soulevé qu'indirectement, par l'intermédiaire du composant (1), et
un châssis de transport (3) pour la réception et le transport du châssis de montage (2) avec le composant (1) fixé de manière amovible sur celui-ci, le châssis de transport (3) comportant au moins un dispositif de fixation pour la fixation amovible sur le châssis de transport (3) du châssis de montage (2) avec le composant (1) fixé de manière amovible sur celui-ci et une surface de base supérieure à celle du châssis de montage (2), et pouvant être levé et chargé avec le châssis de montage (2) fixé de manière amovible sur celui-ci et le composant (1) fixé de manière amovible sur de dernier au moyen des points d'accrochage (6, 7) disposés sur le châssis de transport (3).

2. Dispositif (2, 3) selon la revendication 1, **caractérisé en ce que** le châssis de montage (2) est fixé par connexion à friction sur le châssis de transport (3).

3. Dispositif (2, 3) selon la revendication 1, **caractérisé en ce que** le châssis de montage (2) est fixé par connexion à engagement positif sur le châssis de transport (3) .
